# EUROPEAN PATENT SPECIFICATION

(11) **EP 1 949 677 B1**
(45) Date of publication and mention of the grant of the patent: **16.03.2011**
(21) Application number: 06837036.0
(22) Date of filing: 07.11.2006
(51) Int. Cl.: B60R 11/02

(54) **ENTERTAINMENT SYSTEM MOUNTABLE IN A VEHICLE SEAT**
IN EINEM FAHRZEUGSITZ ANBRINGBARES UNTERHALTUNGSSYSTEM
SYSTEME AUDIOVISUEL MONTABLE DANS UN SIEGE DE VEHICULE

(30) Priority: 07.11.2005 US 734329 P
(43) Date of publication of application: 30.07.2008
(73) Proprietor: AUDIOVOX CORPORATION, Hauppauge, New York 11788 (US)
(72) Inventor: SHALAM, David, M., Syosset, NY 11791 (US)
(74) Representative: Barth, Stephan Manuel
(86) International application number: PCT/US2006/043300
(87) International publication number: WO 2007/056345

(56) References cited:
- EP-A- 1 550 583
- US-A- 5 842 715
- US-A1- 2005 099 547
- US-A1- 2005 242 636
- US-B1- 6 739 654

## Description

The present invention relates to an entertainment system for a seat of a vehicle according to the preamble of claim 1 which is known from U.S. 2005/0242636 A1.

EP I 550 583 A1 discloses a view angle-adjustable detachable display assembly, which includes an outer casing mountable in the back opening of the headrest of the vehicle seat, an inner casing fastened pivotally with the inside of the outer casing, an electric contact connector held in a connector holder in the inner casing and connected to a circuit board inside the outer casing through a flexible bus line, and a display panel detachably fastened to the inside of the inner casing by a hook joint.

US. 5,842, 715 relates to a vehicular entertainment system allowing the ratio fitting of an entertainment unit to the rear of a front seat of a vehicle for the purpose of entertaining children.

US 2005/0099547 A1 discloses an automobile entertainment system integrating a video source and a video monitor within the headrest of an automobile or the sealing of an automobile.

As society becomes more mobile and therefore spends a greater amount of time traveling and away from home, demand rises for electronic appliances and devices outside the home environment. For example, video screens have been mounted in the headrests of vehicles, facilitating video entertainment on the road. These video screens are connected to video players located, for example, in the glove box of the vehicle.

However, the video player and video screen cannot be removed from the vehicle. Thus, videos may only be viewed with such systems when occupying the vehicle. In addition, there is also a risk of theft of the video screen and video player and corresponding damage to the vehicle when the vehicle is unattended. Further, a video screen and player that is not removable is difficult to replace or service.

Therefore, a need exists for a video system which is easily removable from a headrest.

### SUMMARY OF THE INVENTION

In accordance with the present invention, an entertainment system for a seat of a vehicle is provided which is defined in independent claim 1. The entertainment system includes a housing adapted for being mounted within a seat of a vehicle and a media unit housed within the housing and pivotably coupled to the housing. The housing includes a groove formed within a sidewall of the housing adapted to engage a movable latch of the media unit. Preferred embodiments are listed in the dependent claims.

### BRIEF DESCRIPTION OF THE DRAWINGS

Embodiments of the present invention will be described below in more detail, with reference to the accompanying drawings:
Figure 1A shows a front view of an entertainment system including a media unit coupled to a housing mounted in a headrest, according to an embodiment of the present invention;
Figures 1B and 1D show top views of the entertainment system of Figure 1A with the media unit pivoted outward with respect to the housing, according to an embodiment of the present invention;
Figures 1C and 1E show front views of the entertainment system of Figure 1A with the media unit pivoted outward with respect to the housing, according to an embodiment of the present invention;
Figures 1F-1H show sides views of the entertainment system of Figure 1A with the media unit pivoted outward with respect to the housing, according to an embodiment of the present invention;
Figures 2A and 2B show front views of the entertainment system including the media unit coupled to the housing, according to an embodiment of the present invention;
Figure 2C shows a front view of the entertainment system with the media unit pivoted outward with respect to the housing, according to an embodiment of the present invention
Figures 2D shows a rear view of the entertainment system including the media unit coupled to the housing, according to an embodiment of the present invention;
Figure 2E shows a top view of the entertainment system including the media unit coupled to the housing, according to an embodiment of the present invention;
Figure 2F shows a bottom view of the entertainment system including the media unit coupled to the housing, according to an embodiment of the present invention;
Figure 2G shows a side view of the entertainment system including the media unit coupled to the housing, according to an embodiment of the present invention;
Figure 2H shows a side view of the entertainment system including the media unit coupled to the housing, with the media unit pivoted outward with respect to the housing, according to an embodiment of the present invention;
Figure 3A shows a close-up view of a tab engaged with a slot for restricting pivoting of the media unit with respect to the housing, according to an embodiment of the present invention;
Figure 3B shows a close-up view of the tab of Figure 3A in the extended position, according to an embodiment of the present invention;
Figure 3C shows a close-up view of the tab of Figure 3A in the retracted position, according to an embodiment of the present invention;
Figure 4A shows a front view of a headrest including a wired connection, according to an embodiment of the present invention;
Figure 4B shows a close-up view of the wired connection shown in Figure 4A, according to an embodiment of the present invention;
Figure 5A shows a front view of the entertainment system including the media unit coupled to the housing, with a trim portion removed from the housing, according to an embodiment of the present invention;
Figure 5B shows a front view of the trim portion referred to in the description of Figure 5A, according to an embodiment of the present invention;
Figure 5C shows a close-up front view of a hinge portion coupling the media unit to the housing, according to an embodiment of the present invention;
Figure 5D shows a close-up side view of a hinge portion coupling the media unit to the housing, according to an embodiment of the present invention;
Figure 5E shows a close-up front view of recesses for receiving fixing devices for fixing the hinge portion of Figures 5C-5D to the housing, according to an embodiment of the present invention;
Figure 5F shows a close-up front view of another hinge portion coupling the media unit to the housing, according to an embodiment of the present invention;
Figure 5G shows a side view of the housing including a recess for receiving the hinge portion of Figure 5F, according to an embodiment of the present invention;
Figure 6A shows a front view of the housing, according to an embodiment of the present invention;
Figure 6B shows a rear view of the housing, according to an embodiment of the present invention;
Figure 6C shows a bottom view of the housing, according to an embodiment of the present invention;
Figure 6D shows a close-up front view of part of the housing, according to an embodiment of the present invention;
Figure 6E shows a close-up rear view of part of the trim portion, according to an embodiment of the present invention;
Figures 7A-7B show an electrical connector running from the media unit, according to an embodiment of the present invention;
Figures 7C shows a connector positioned in the media unit for receiving the electrical connector shown in Figure 7D, according to an embodiment of the present invention;
Figure 7D shows an electrical connector, according to an embodiment of the present invention; and
Figures 7E-7F show a cover for holding the electrical connector shown in Figure 7D in place on the media unit, according to an embodiment of the present invention.

### DETAILED DESCRIPTION OF THE EMBODIMENTS

Disclosed is an entertainment system capable of being mounted in a seat of a vehicle. For example, the entertainment system includes a housing mounted in a headrest of a seat of a vehicle, such as, for example, an automobile, minivan or sport utility vehicle (SUV). The housing may also be mounted in a body of a vehicle seat. The entertainment system further includes a media unit that is pivotably coupled to the housing.

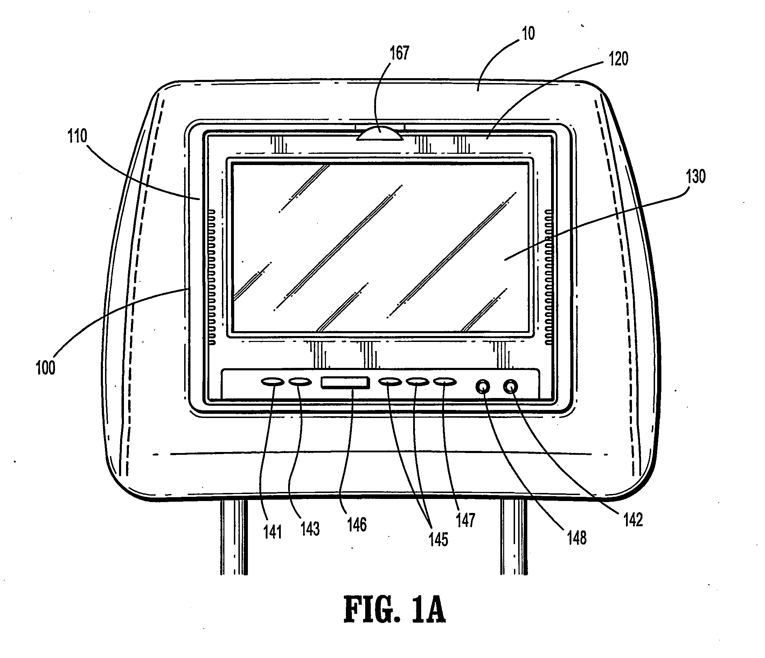

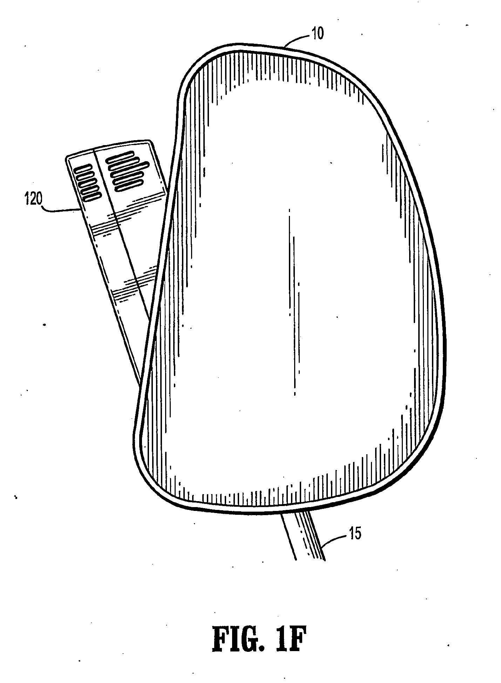

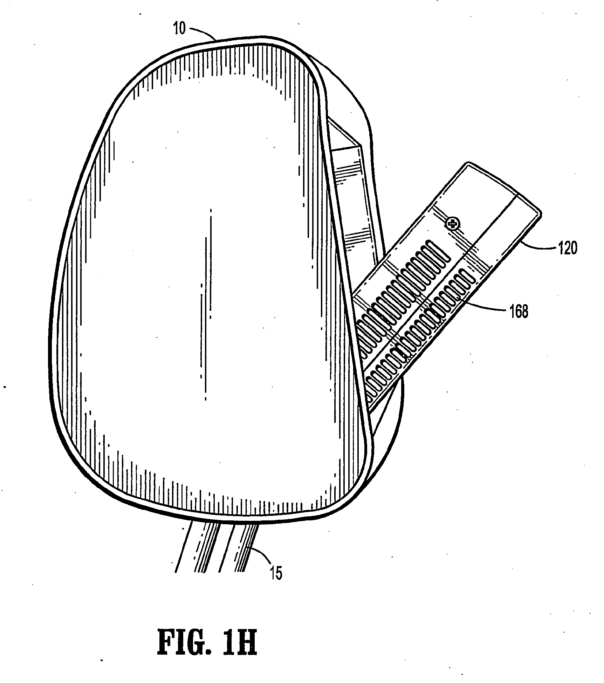

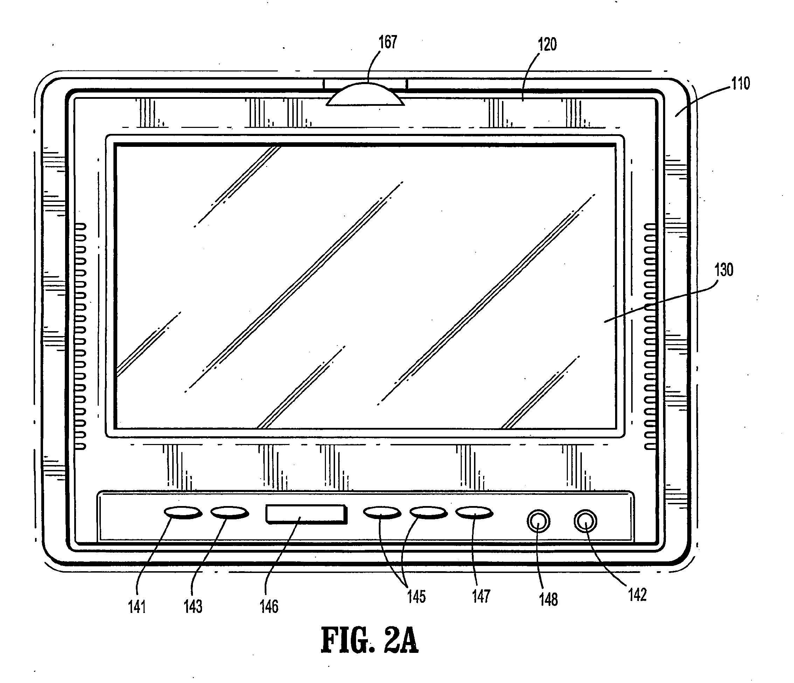

Referring to Figures 1A-1H and 2A-2H, a headrest 10 includes an entertainment system 100 mounted therein. The entertainment system 100 includes a housing 110 and a media unit 120, which is coupled to the housing 110. Moreover, the media unit 120 includes a display 130 having a screen for displaying video. The screen is preferably an LCD type display, but may be another type of display, such as, for example, an organic LED or electroluminescent display.

In one embodiment, an LCD simultaneously displays different content in right and left viewing directions by directionally controlling the viewing angle of the LCD. In other words, one passenger can see a program from a first media source from a right side of the display, while another can see a program from a second media source from the left side of the display. The simultaneous display of different content on the display (*e.g*., display 130), is accomplished by superimposing a parallax barrier on a thin film transistor (TFT) LCD to enable light from a backlight to separate into right and left directions.

In the present exemplary embodiment, video is supplied from a media source, for example, a DVD player 140 provided behind the display 130. The media source may also be, for example, a CD-ROM player, a video game player, a videocassette player, a television tuner, a radio tuner, a wireless receiver, an MP3 player, a digital video recorder (DVR), a device for playing media supplied from a portable storage device (*e.g*., a portable hard drive, memory cards, flash memory sticks, key drives, thumb drives) and/or a device for playing media supplied from a portable media player, such as for example, an audio or video ipod ®. The media unit 120 may include a memory device, for example, a DVR, which receives and stores video programming, and hardware for playing such programming. Alternatively, the display 130 can be electrically connected to an auxiliary media source through auxiliary port 142.

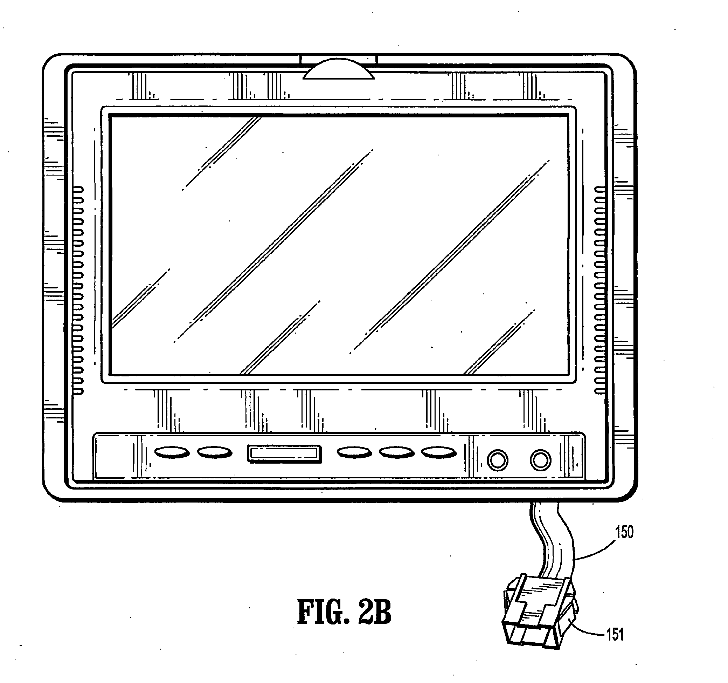

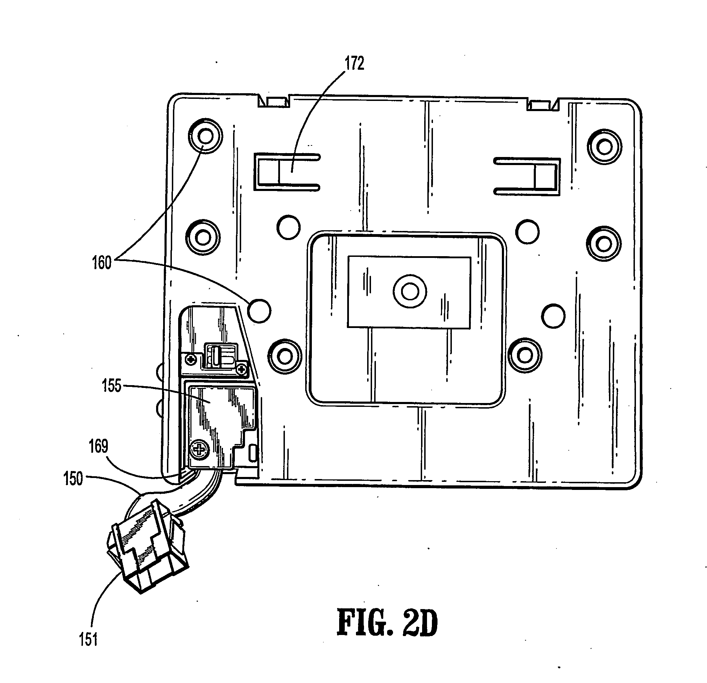

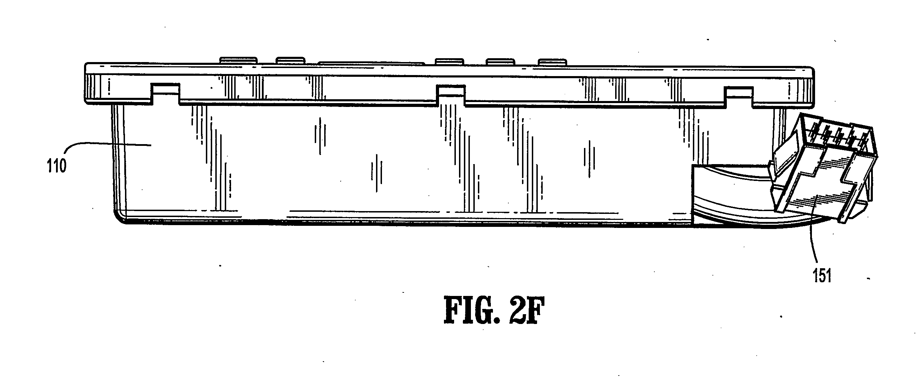

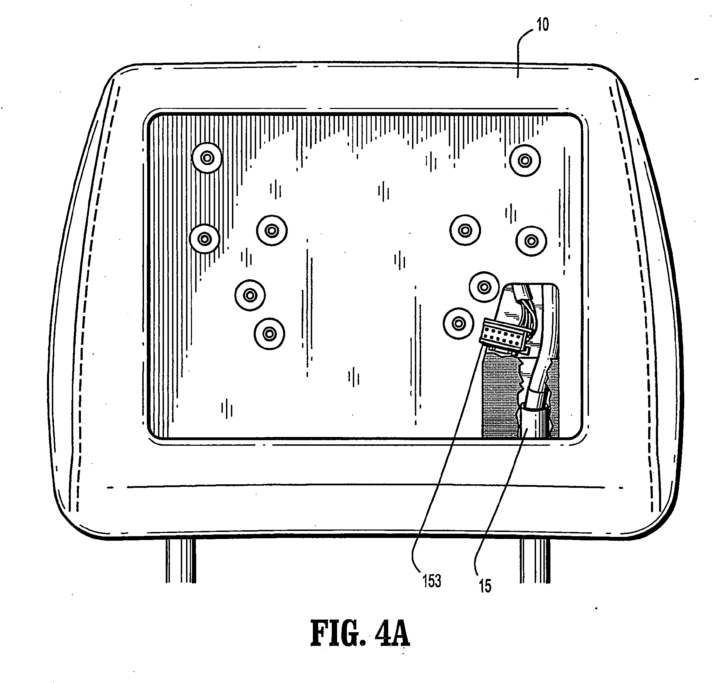

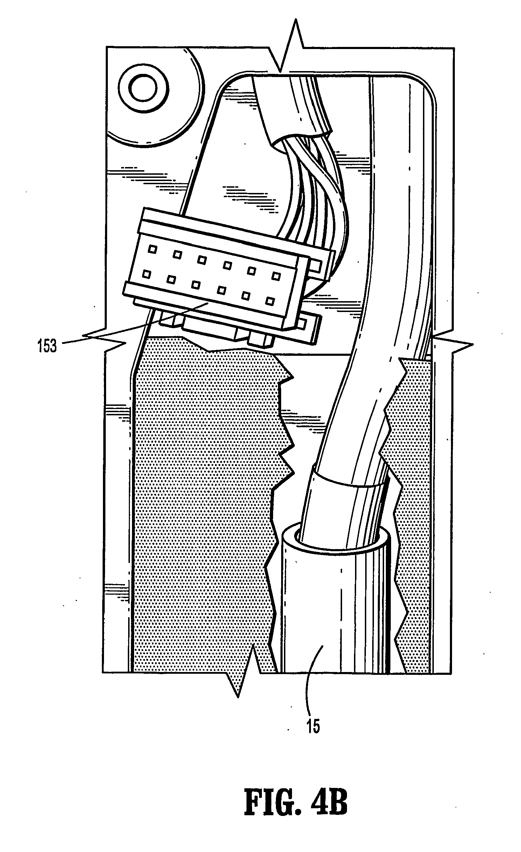

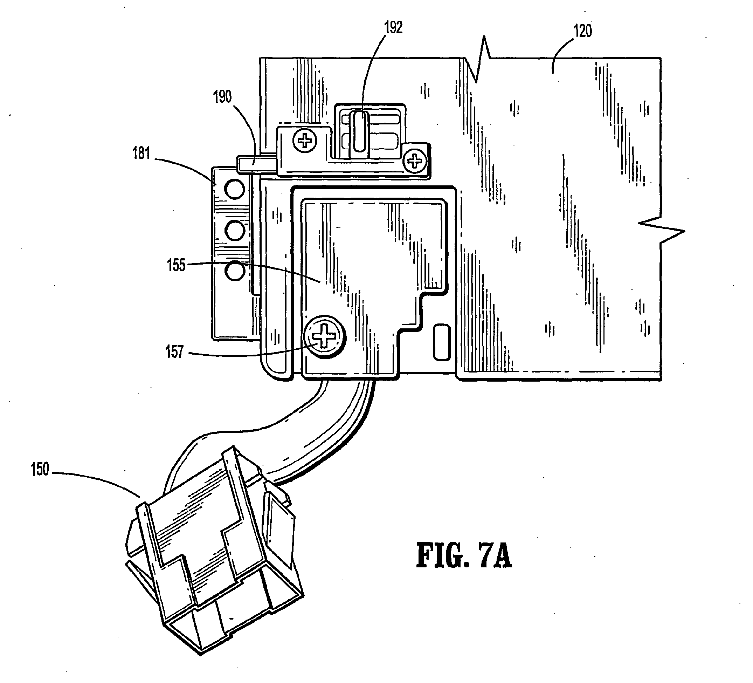

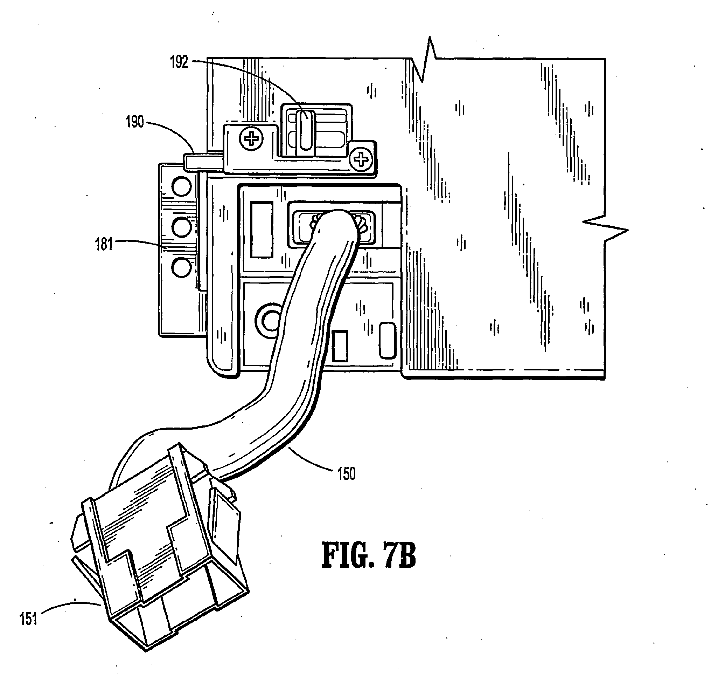

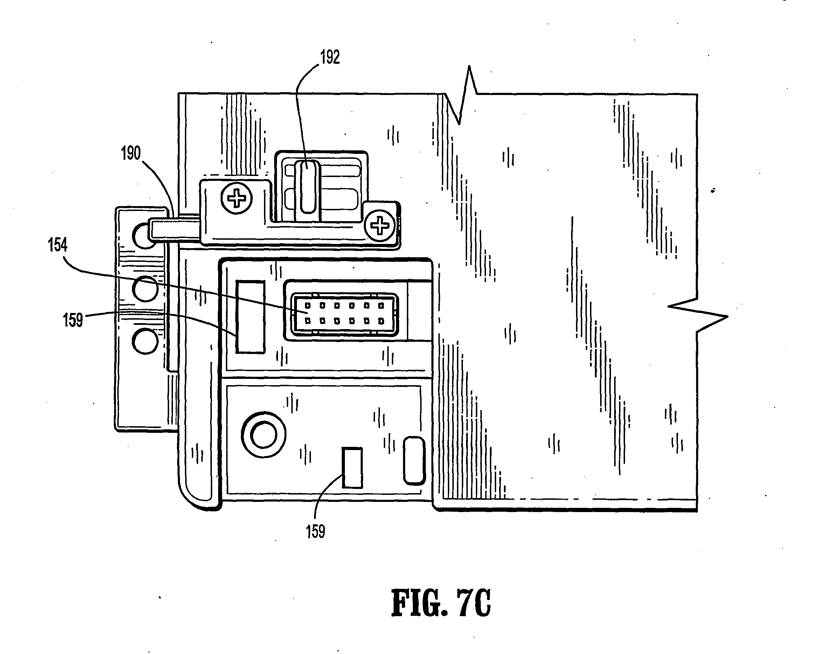

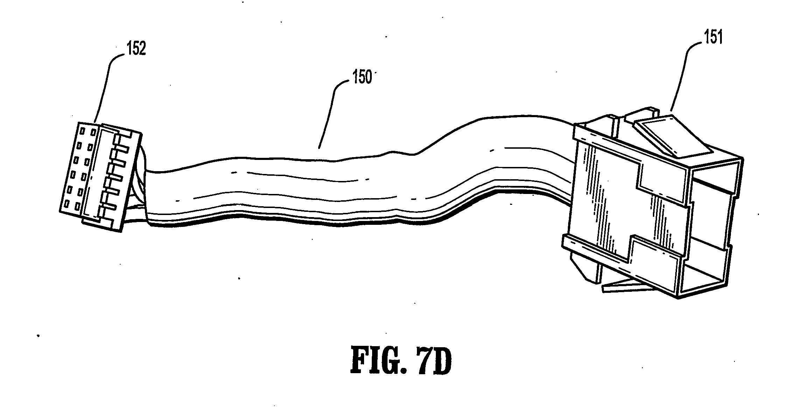

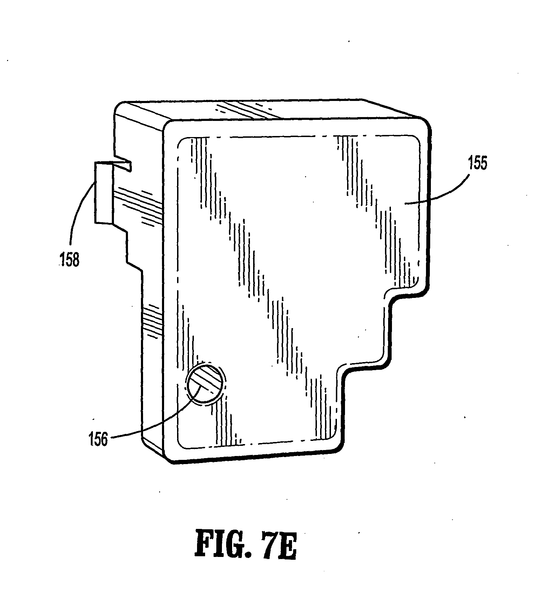

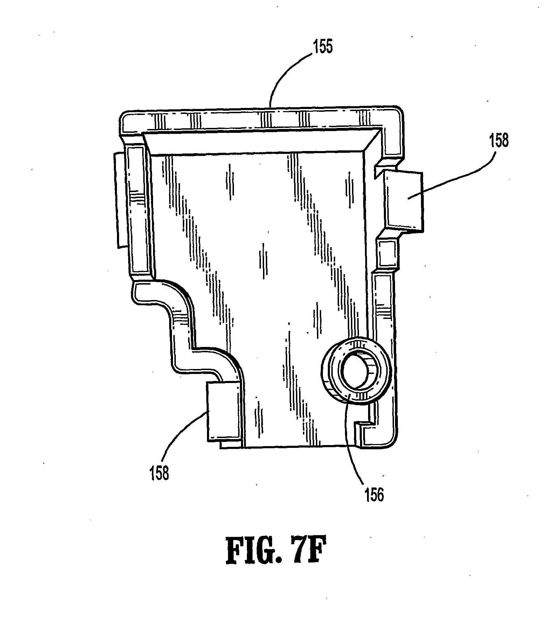

In another alternative, the display 130 is electrically connected to a media source, for example, another DVD player in another headrest, via a wired connection running from the media unit 120. Referring to Figures 2B, 2D, 2F and 7A-7D, the wired connection running from the media unit 120 preferably includes a two-headed electrical connector 150, including, for example, pin convectors 151 and 152. The pin connector 151 connects to a mating pin connector 153 positioned in the headrest 10 (see Figs. 4A-4B), which is, in turn, connected to wire leads running through the headrest support rods 15 to connect to a wire harness or a distribution box (not shown). By unplugging the pin connectors 151, 153 from each other, a user is able to remove the media unit 120 from the headrest 10 without cutting or pulling apart the wires. The pin connector 152 connects to a mating pin connector 154 positioned in the media unit 120.

Referring to Figures 7A-7F, the electrical connector 150 is positioned at a rear portion of the media unit 120, with pin connector 152 connected to pin connector 154. Connector 150 is held in place by cover 155, which includes a hole 156 for receiving a fixing device, such as, for example, a screw 157, and tabs 158 for fitting into slots 159 on the media unit 120. Referring to Figures 2D, 5E and 6A-6C, the housing 110 includes opening 169 through which wires (*e.g*., connector 150) can be fed.

The wired connection preferably carries, for example, power, ground, and audio/video inputs and outputs. For example, video from DVD player 140 may be supplied via the wired connection, including electrical connector 150 and connectors 151-154, to a display located in another headrest of the vehicle. The wired connection may also carry control signals for a wireless FM modulator for supplying wireless audio to a vehicle sound system or to wireless headphones.

Referring to Figures 1A, 2A, 2B and 5A, the front face of the media unit 120 includes a plurality of control buttons, for example, a power button 141, a screen mode button 143 for controlling aspect ratio, play and stop buttons 145 for controlling play of a video program and a source button 147 for controlling the source of a program (*e.g*., DVD or auxiliary input). Depending on the selected sources for each media unit, multiple displays in multiple headrests may simultaneously play the same or different programs. The media unit 120 also includes an infrared transmitter and receiver 146 for transmitting, for example, wireless audio signals to wireless headphones, and for receiving remote control signals. A headphone jack 148 is also positioned on the front face of the media unit 120.

The media unit 120 includes slits 168 formed in the body thereof, creating openings to facilitate ventilation and the passage of sound from, for example, a speaker (not shown) provided in the body of the media unit 120.

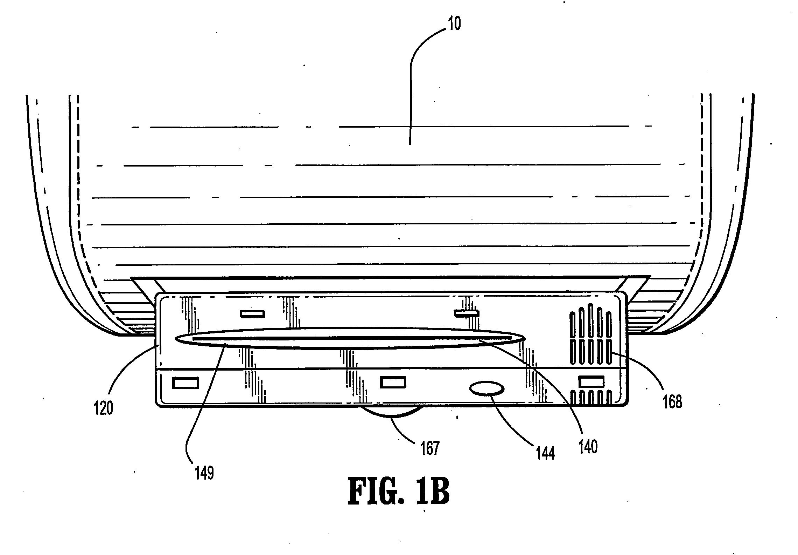

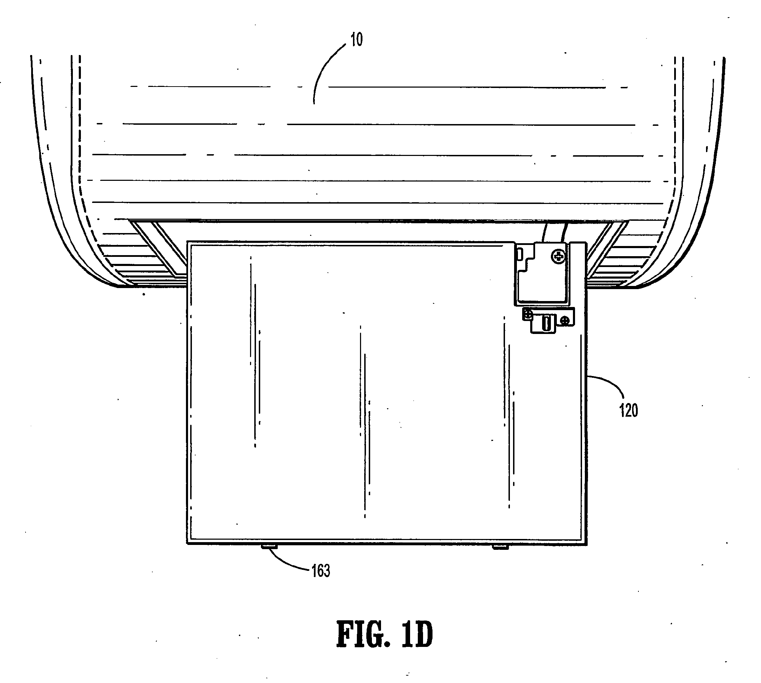

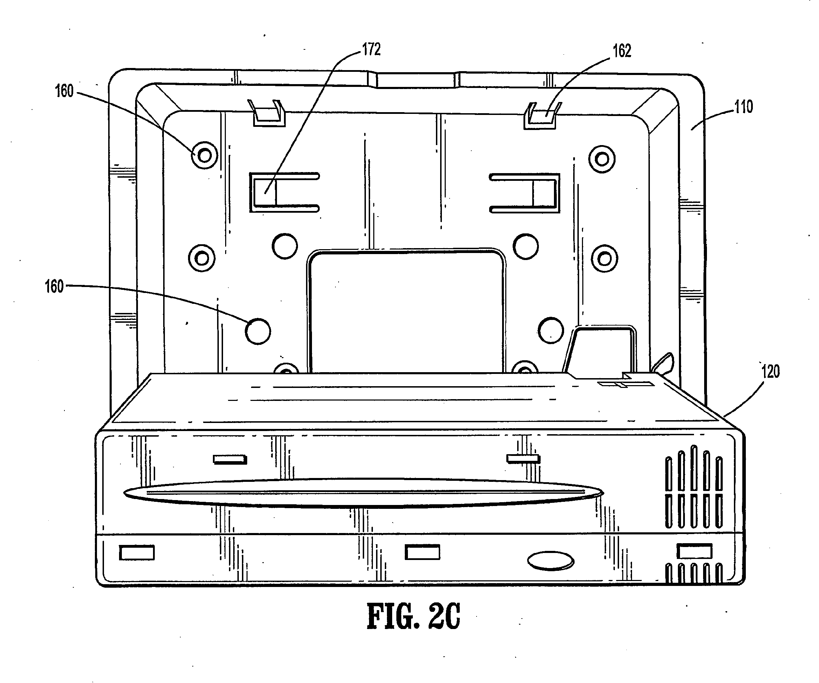

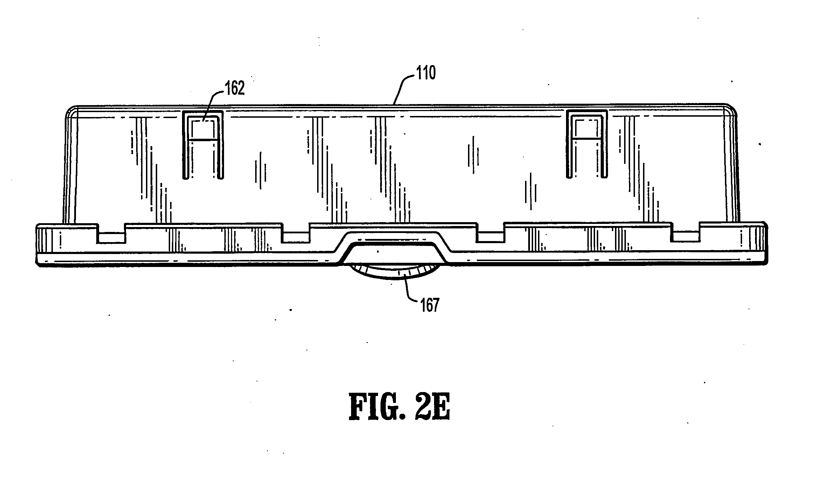

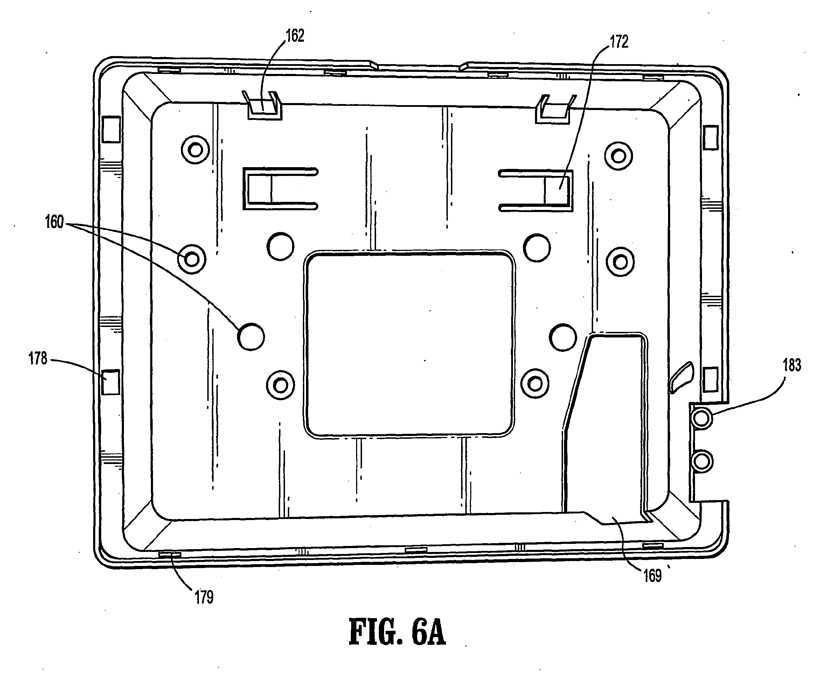

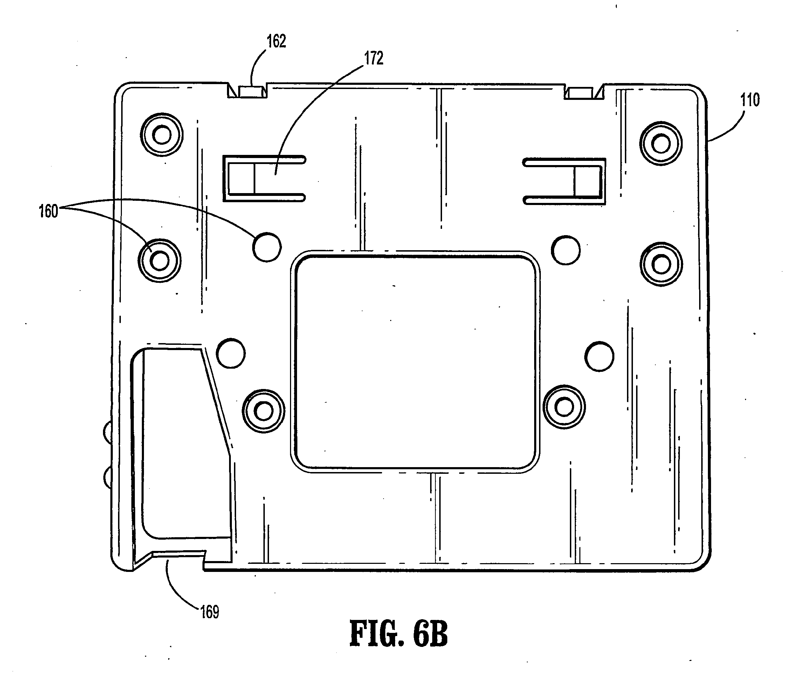

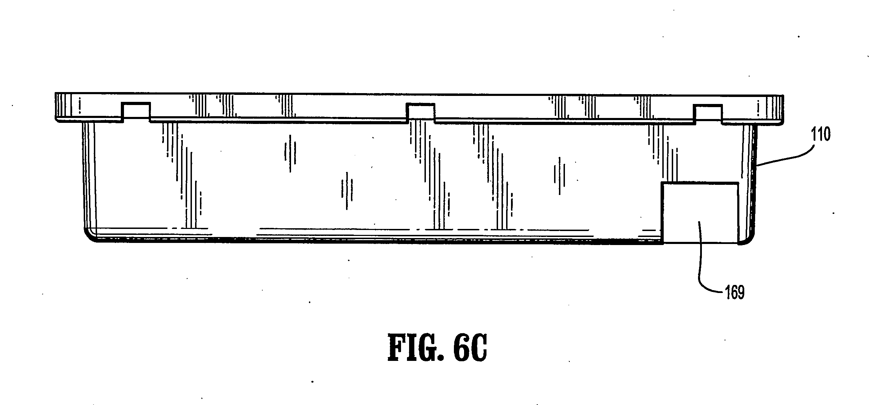

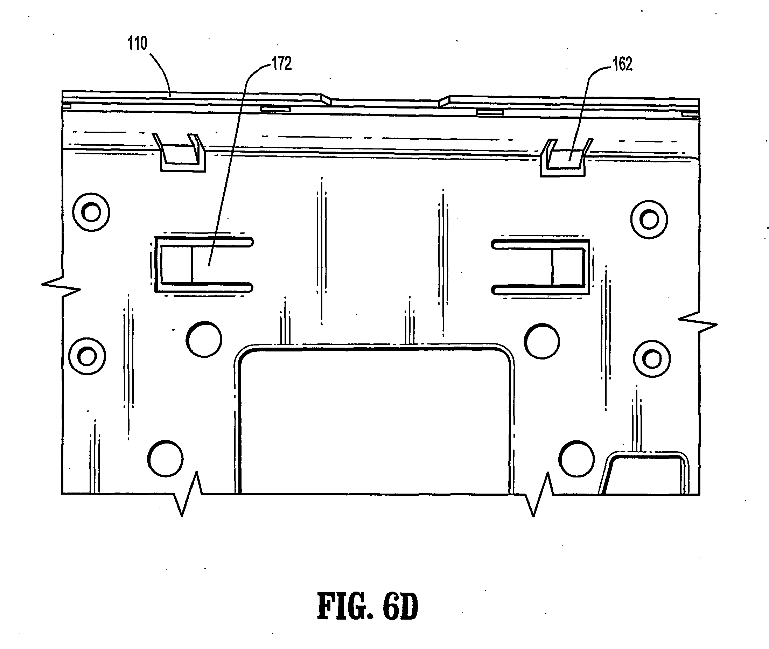

Referring to Figures 2C, 2D, 6A, 6B and 6D, the housing 110 includes a plurality of recesses 160 for receiving fixing devices, such as screws 161 for mounting the housing 110 to a rigid portion of the headrest 10 (see Fig. 4A). Referring to Figures 2C, 2E and 6A-6B, the housing 110 also includes a plurality of flexible members 162, which flex upward by pressure from tabs 163 (see Fig. 1D) when the media unit 120 is pivoted into the housing 110. Once the tabs 163 pass the flexible members 162, the flexible members flex back downward to hold the media unit 120 in place. When the media unit 120 is pivoted out of the housing (see, e.g., Figs. 1B-1C), the members 162 flex back upward similar to when the media unit 120 is pivoted into the housing 110 to allow the media unit 120 to freely rotate. The above-mentioned engagement between the flexible members 162 and the tabs 163 allows for the media unit 120 to be readily snapped into and/or removed from the housing 110 of the entertainment system without the use of any fasteners, such as, for example, screws, bolts, nails, tools, or the like. Thus, the exemplary embodiments of the present invention allow for the media unit 120 to be installed and/or removed with very little effort, which in turn saves on installation time and avoids having to return the whole headrest but rather only the media unit 120 itself, if the media unit 120 needs to be repaired.

As shown in Figures 1A, 1B, 2A, 2B, 2E and 5A, the media unit 120 includes a tab 167 that can be gripped by a user to pull the media unit 120 out from a secured position in the housing 110. The tab 167 is positioned at a top center portion of the front face of the media unit 120.

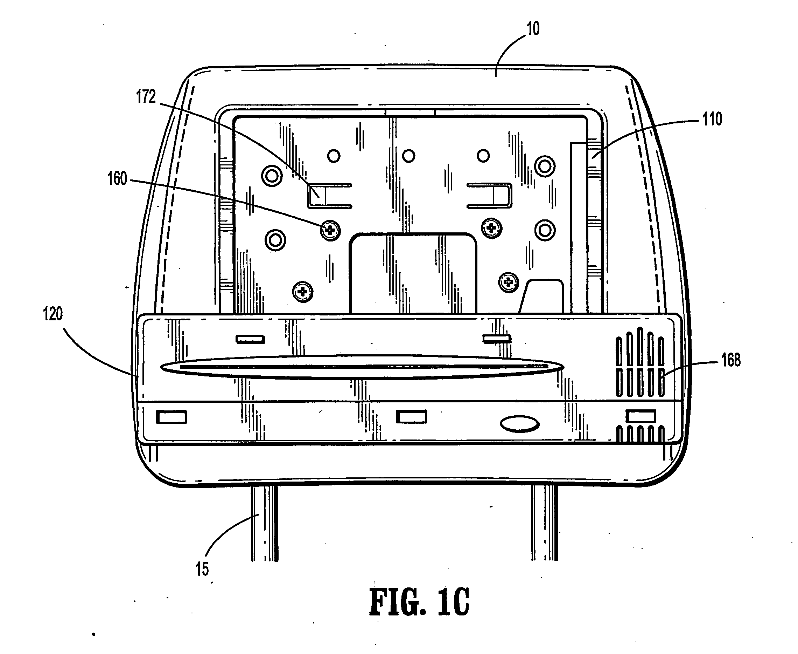

Referring to Figures 1C, 1E, 2C, 2D, 6A, 6B and 6D, the housing 110 includes flexible members 172 provided within for example, a front face of the housing, which flex toward the vehicle seat when the media unit 120 is pivoted into the housing 110 and held in place by the flexible members 162. When the media unit 120 is pivoted out of the housing (see e.g., Figs. 1B-1C), the members 172 flex away from the seat to provide a spring force on the media unit 120 to facilitate rotation of the media unit 120 away from the housing 110.

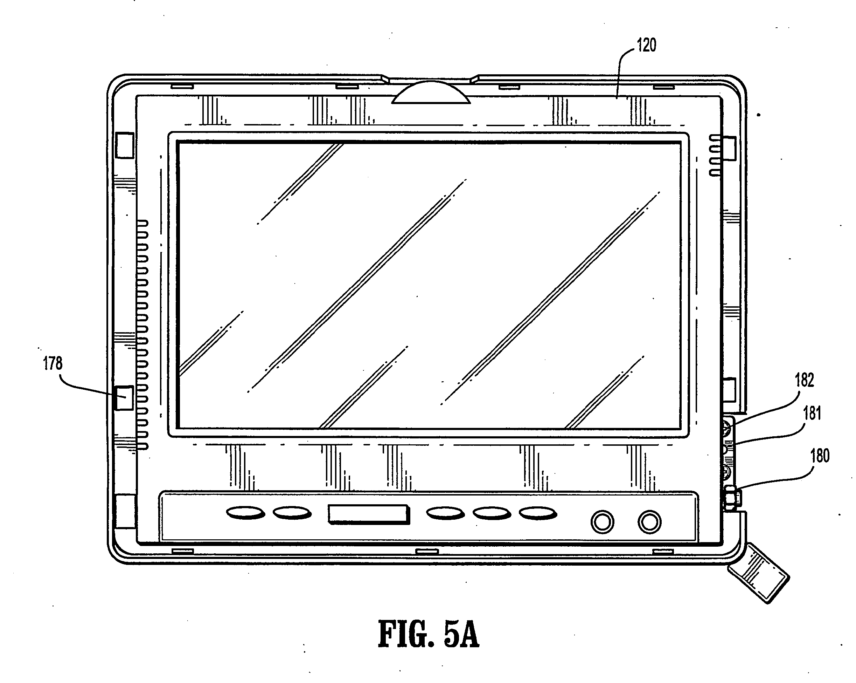

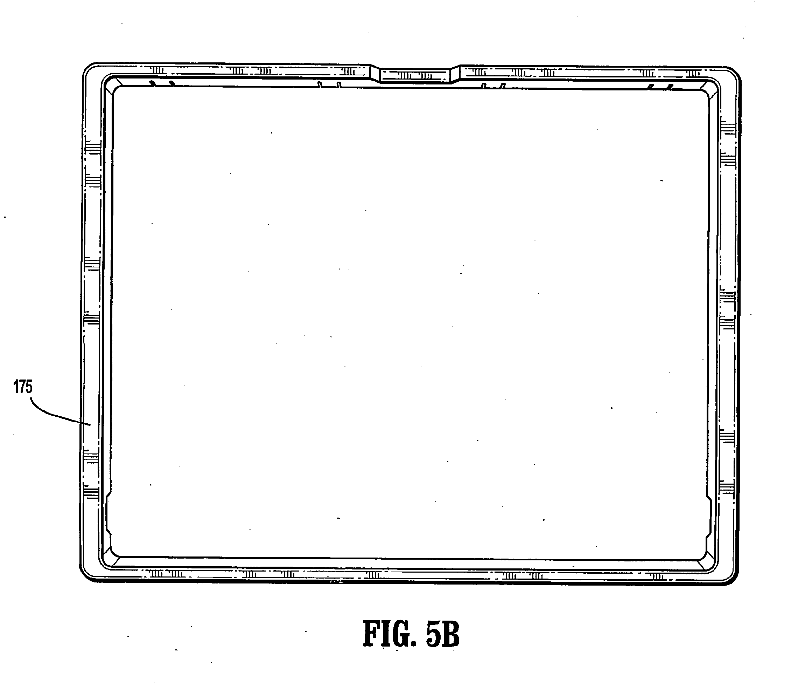

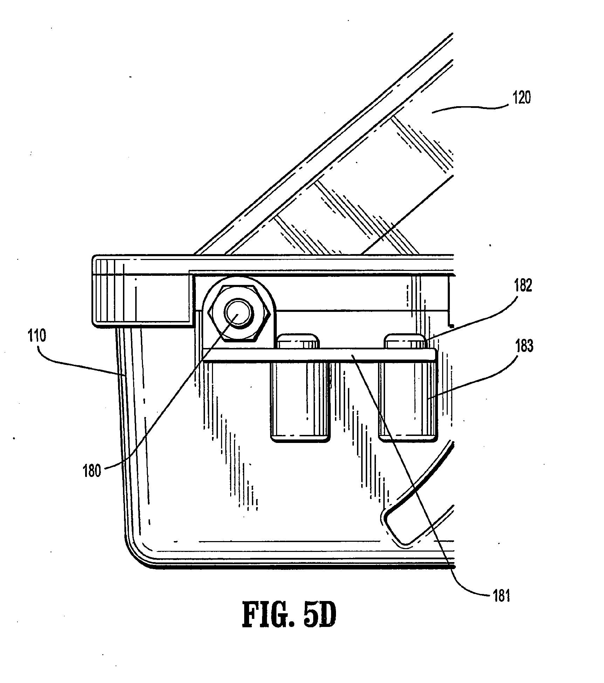

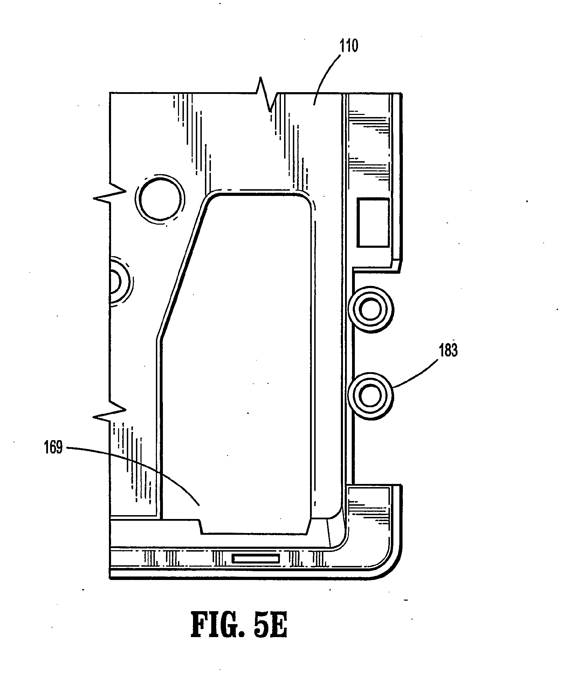

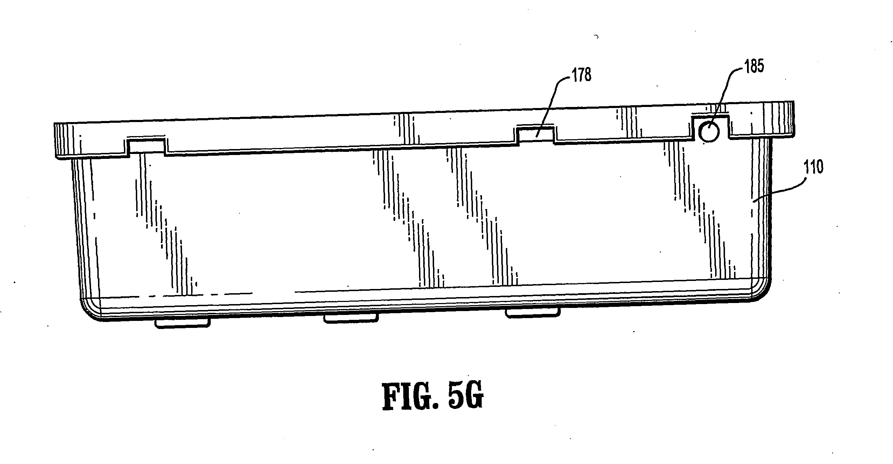

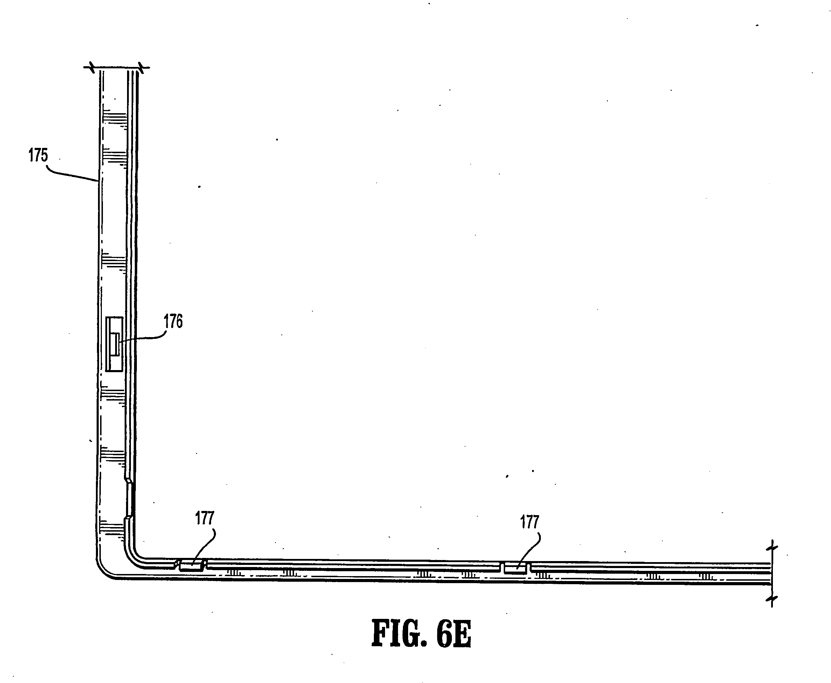

Referring to Figures 5A, 5B, 6A and 6E, the housing 110 includes a trim portion 175, which is removed from and coupled to the housing by manipulating snap-fit mechanisms. For example, the trim portion 175 includes tabs 176 and 177, which snap-fit into recesses 178 and 179, respectively. The trim portion 175 and the media unit 120 may be provided in different colors to fit with various interior color schemes of a vehicle.

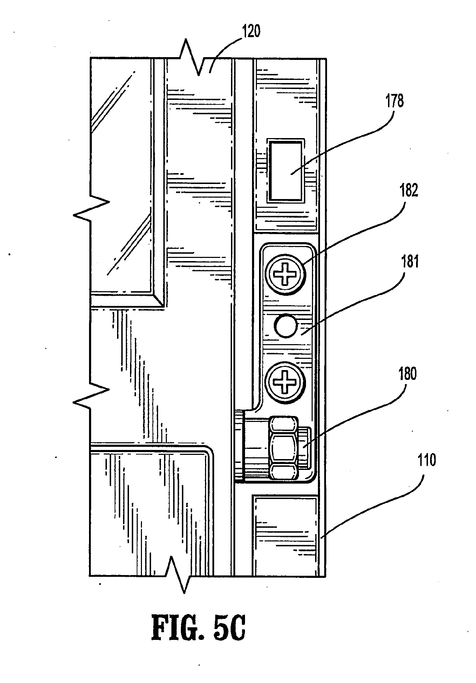

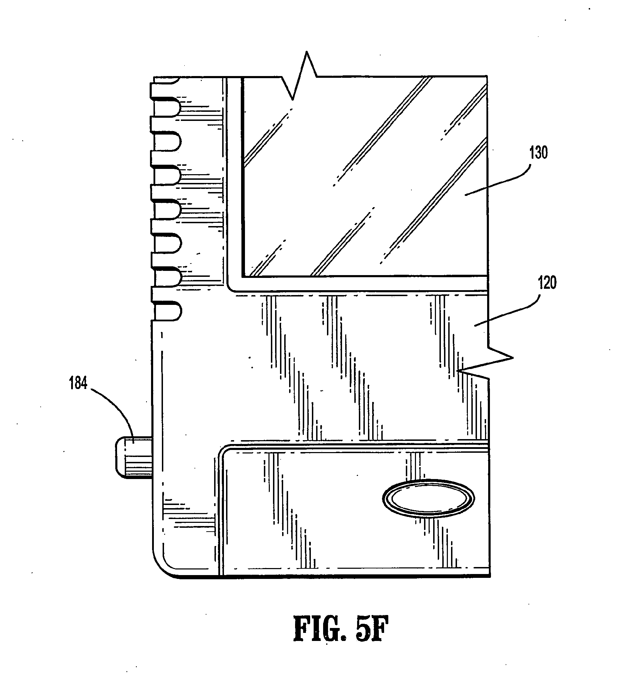

Referring to Figure 5A, when the trim portion 175 is removed, a user/installer is able to access a part of the housing 110 to which a hinge portion 180 is coupled. As shown in Figures 5C-5E, the hinge portion 180 includes a plate 181, through which fixing devices, such as, for example, screws 182, are driven into recesses 183 formed in the housing 110. Referring to Figures 5F-5G, a second hinge portion 184, formed on a side of the media unit 120 opposite to the side on which the hinge portion 180 is formed, fits into a recess 185 formed in the housing 110. As a result, the media unit 120 is coupled to the housing 110 via hinge portions 180 and 184.

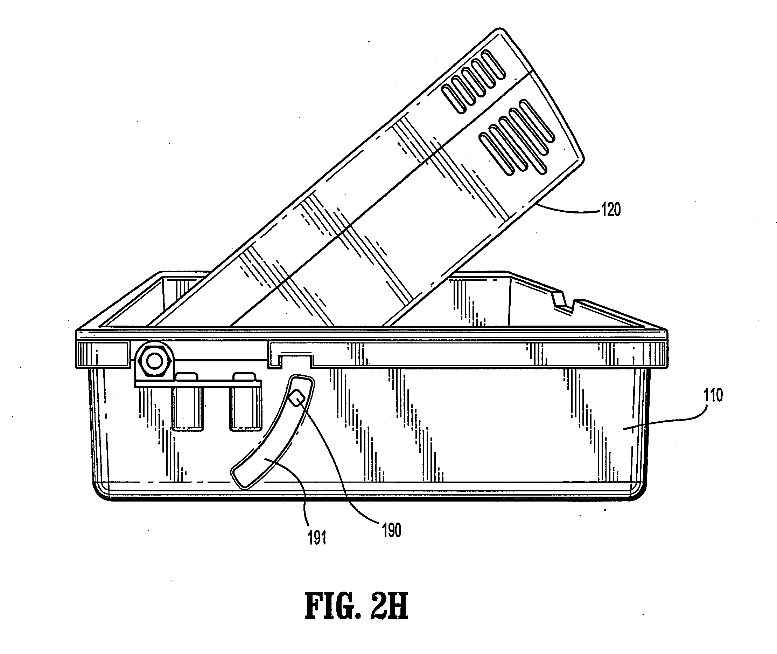

As shown in Figures 1B-1H, 2C and 2H, the media unit 120 can be pivoted outward with respect to the housing 110 to adjust a viewing angle of the display 130 and to provide access to a media source 140 to insert or remove a media storage medium, such as, for example, a DVD. The media storage medium insertion point 149 and control buttons 144 for the media source 140, such as, for example, an "eject" button, can be located on a top side of the media unit 120.

The hinge arrangement permits rotation of the media unit with respect to the housing in the range of approximately 0° to approximately 135°. Alternative hinges known to those of ordinary skill in the art may be used and the angle range of rotation may be varied to be greater or smaller depending on design preferences.

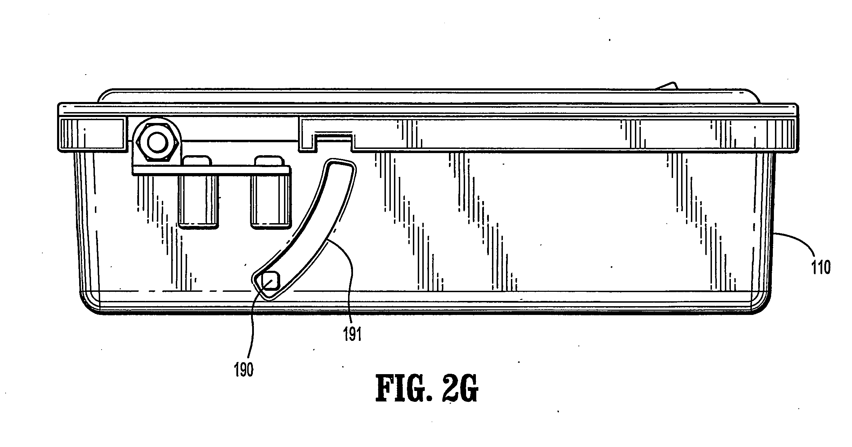

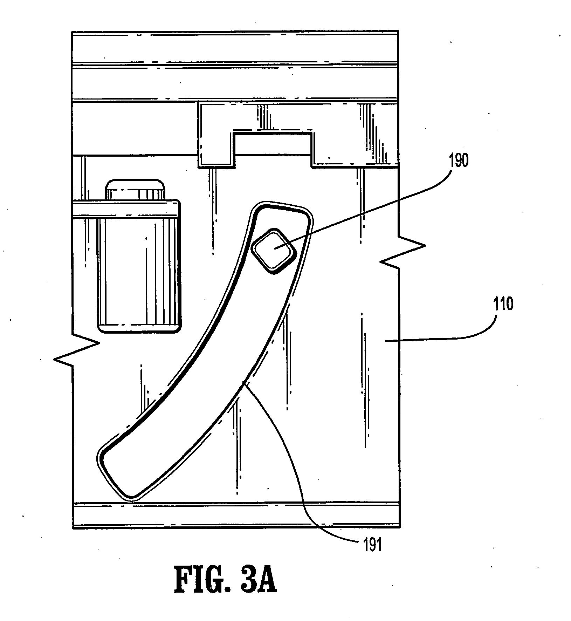

Referring to Figures 3A-3C (see also Figs. 1D, 1E, 2D, 2H and 7A-7C), the media unit 120 includes a tab 190 on a back side thereof that can be extended to engage a curved slot/groove 191 formed in a sidewall of the housing 110. The groove 191 follows the rotation of the media unit 120 with respect to the housing 110 and, as shown in Figures 2G-2H, engagement of the tab 190 with the groove 191 restricts an angle of rotation of media unit 120 in a range of approximately 0° to approximately 45°.

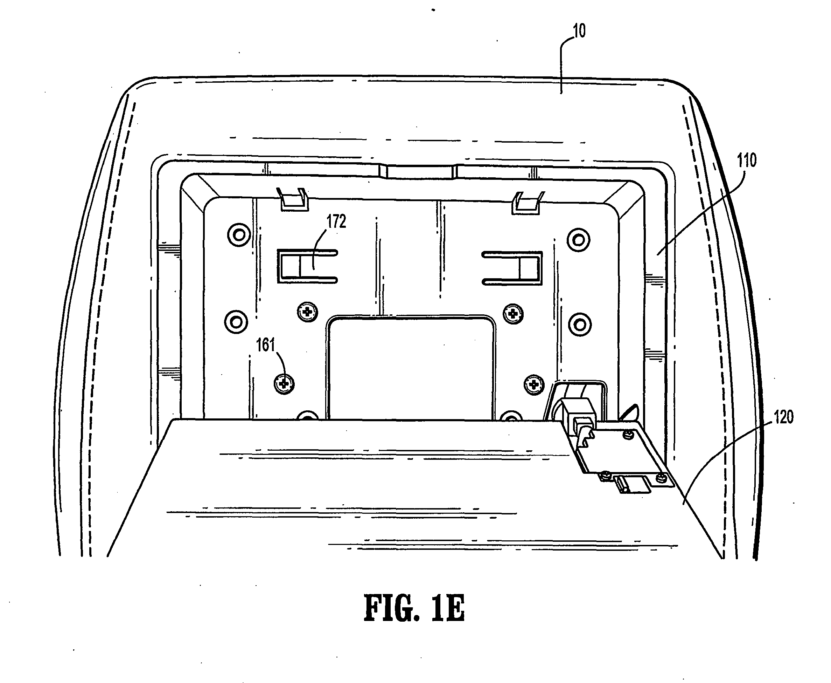

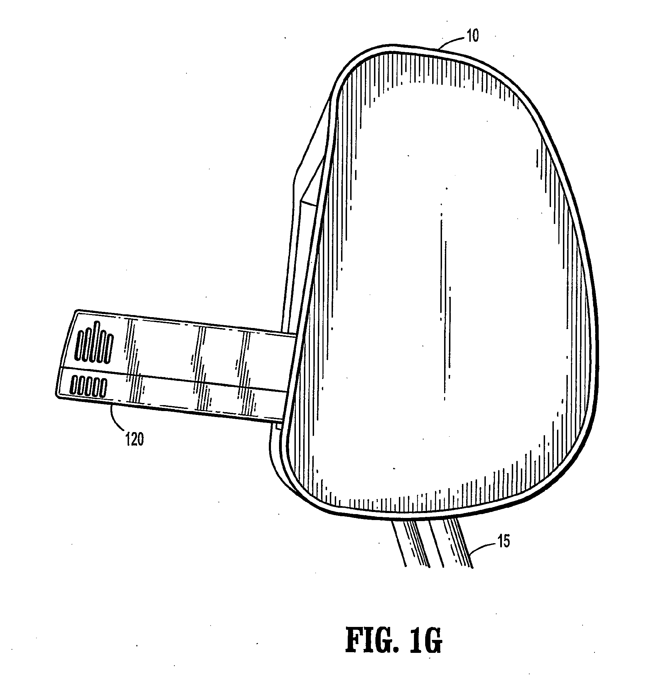

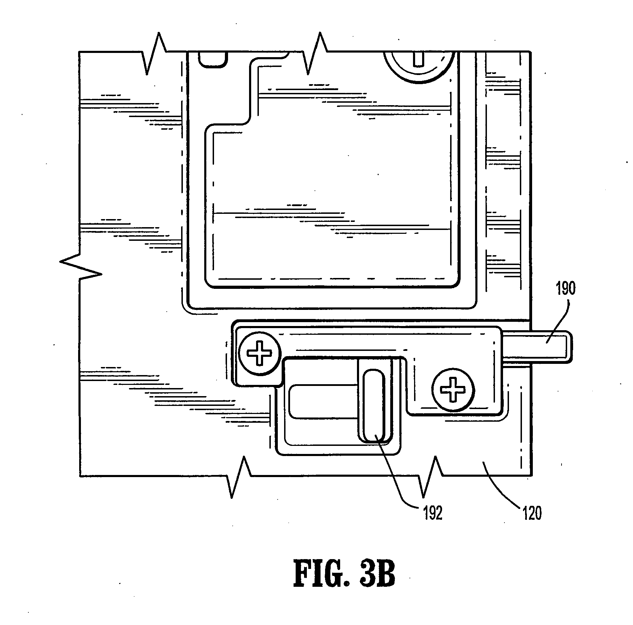

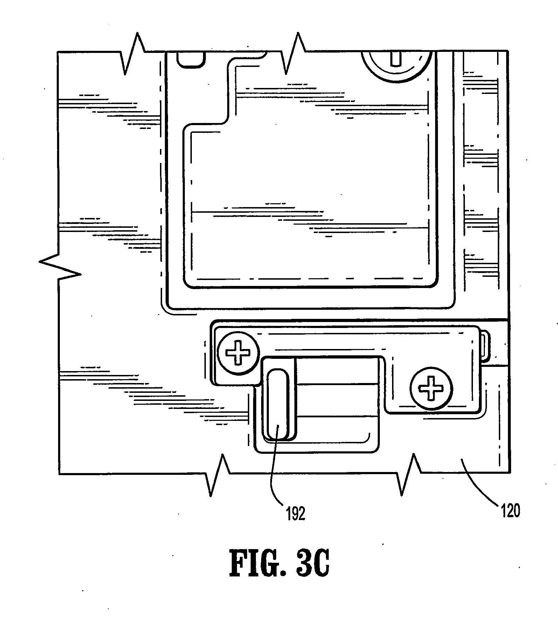

As shown in Figures 3B-3C, the tab 190 can be extended or retracted by sliding a handle 192 attached to the tab 190 in opposite lateral directions. When the tab 190 is in the retracted position as shown in Figure 3C, the tab 190 is not engaged with the groove 191. As a result, the media unit 120 can be pivoted to angles greater than about 45°, to, for example, about 90° and about 135° with respect to the housing 110, as shown in Figures 1C-1E and 1G. As shown in Figure 1E, pivoting the media unit 120 to greater angles with respect to the housing 110 permits access to fixing devices 161 for coupling the housing 110 to the headrest 10, and to electrical connectors 151 and 153 to facilitate removal of the housing and/or media unit from the seat.

In an embodiment, the media unit 120 can be operated when the media unit 120 is not positioned in the housing 110. The media unit 120 may receive power by connecting to a specialized battery or battery pack, household batteries and/or an AC/DC adapter. The connection between the battery pack and the media unit 120 may be provided through any appropriate electrical contracts, for example, contacts for connecting to Lithium or NiCad batteries. The media unit 120 can connect to an AC/DC adapter via an AC/DC adapter port. Alternatively, a battery housing in the media unit 120 can be used to receive household batteries or compact battery packs.

Having described the exemplary embodiments of the present invention, it is further noted that it is readily apparent to those of reasonable skill in the art that various modifications may be made without departing from the scope of the invention which is defined by the metes and bounds of the appended claims.

## Claims

1. An entertainment system for a seat of a vehicle comprising:
a housing (110) adapted for being mounted within a seat of a vehicle; and
a media unit (120) housed within the housing (110) and pivotably coupled to the housing (110),
**characterized in that**
the housing (110) includes a curved groove (191) formed within a sidewall of the housing (110) adapted to engage a laterally movable tab (190) located on a backside of the media unit (120), and wherein the tab (190) can be either extended to engage with the groove (191) or can be retracted such that the tab (190) is not engaged with the groove (191) by sliding a handle (192) attached to the tab (190) in opposite lateral directions and wherein the curved groove (191) follows rotation of the media unit (120) with respect to the housing (110), and a flexible member (162) provided on a sidewall of the housing (110) to engage a portion of the media unit (120) for snapping the media unit (120) into place within the housing (110), wherein the portion of the media unit (120) engaging the flexible_member (162) includes a tab (163), and wherein the flexible member (162) flexes away from a center of the housing (110) by pressure from the tab (163) when the media unit (120) is pivoted into the housing (110) and once the tab (163) passes the flexible member (162), the flexible member (162) flexes toward the center of the housing (110).

2. The entertainment system of claim 1, further comprising:
a flexible member (172) disposed in a face of the housing (110) to provide a spring force on the media unit (120) in a direction away from the housing (110).

3. The entertainment system of claim 1, wherein the housing (110) is mounted in a headrest of the seat of the vehicle.

4. The entertainment system of claim 1, wherein the media unit (120) includes at least one of a DVD player, an MPEG player or a video game player.

5. The entertainment system of claim 1, wherein engagement of the movable tab (190) with the groove (191) restricts the angle of rotation of the media unit (120) with respect to the housing (110) in a range of about 0 degrees to about 45 degrees.

6. The entertainment system of claim 1, wherein the media unit (120) is pivotably connected to the housing (110) via a hinge assembly, and the hinge assembly includes a first hinge portion (180) located on a side of the media unit (120), the first hinge portion (180) including a plate (181) through which a fixing device is driven into a recess (183) formed in the housing (110).

7. The entertainment system of claim 6, wherein the hinge assembly further includes a second hinge portion (184) formed on a side of the media unit (120) opposite to the side of the media unit (120) on which the first hinge portion (180) is formed, and the second hinge portion (184) being adapted to fit in a recess (185) formed in the housing (110).

8. The entertainment system of claim 7, wherein the media unit (120) may be pivoted to an angle of about 135 degrees with respect to the housing (110).

## Patentansprüche

1. Unterhaltungssystem für ein Fahrzeug mit:
einem Gehäuse (110), welches zur Anbringung innerhalb eines Sitzes eines Fahrzeuges eingerichtet ist; und
einer Medieneinheit (120), welche innerhalb des Gehäuses (110) untergebracht ist, und verschwenkbar mit dem Gehäuse (110) verbunden ist,
**dadurch gekennzeichnet dass**,
das Gehäuse (110) eine gekrümmte Nut (191), gebildet innerhalb einer Seitenwand des Gehäuses (110) aufweist, welche eingerichtet ist, mit einer seitlich bewegbaren Lasche (190), welche auf einer Rückseite der Medieneinheit (120) gelegen ist, in Eingriff zu treten, wobei die Lasche (190) entweder ausgefahren werden kann, um mit der Nut (191) in Eingriff zu treten, oder zurückgezogen sein kann, sodass die Lasche (190) nicht in Eingriff mit der Nut (191) steht, indem ein Handgriff (192), der an der Lasche (190) angebracht ist, in entgegengesetzte laterale Richtungen verschiebbar ist, wobei die gekrümmte Nut (191) einer Drehung der Medieneinheit (120) bezüglich des Gehäuses (110) folgt, und dass ein flexibles Element (162) auf einer Seitenwand des Gehäuses (110) vorgesehen ist, um mit einem Bereich der Medieneinheit (120) in Eingriff zu treten, um die Medieneinheit (120) an ihrem Platz innerhalb des Gehäuses (110) zu veschnappen, wobei der Bereich der Medieneinheit (120), der mit dem flexiblen Element (162) in Eingriff steht, eine Lasche (163) aufweist, und wobei das flexible Element (162) sich weg von einem Zentrum des Gehäuses (110) durch Drücken von der Lasche (163) biegen lässt, wenn die Medieneinheit (120) in das Gehäuse (110) geschwenkt ist, und, wenn die Lasche (163) das flexible Element (162) passiert, sich das flexible Element (162) zum Zentrum des Gehäuses (110) biegt.

2. Unterhaltungssystem nach Anspruch 1, weiterhin aufweisend:
ein flexibles Element (172), welches in einer Fläche des Gehäuses (110) angeordnet ist, um eine Federkraft auf die Medieneinheit (120) in einer Richtung weg von dem Gehäuse (110) auszuüben.

3. Unterhaltungssystem nach Anspruch 1, wobei das Gehäuse in einer Kopfstütze des Sitzes des Fahrzeugs angeordnet ist.

4. Unterhaltungssystem nach Anspruch 1, wobei die Medieneinheit zumindest eines der Folgenden aufweist: einen DVD-Player, einen MPEG-Player oder einen Videospiel-Player.

5. Unterhaltungssystem nach Anspruch 1, wobei der Eingriff der beweglichen Lasche (190) innerhalb der Nut (191) den Drehwinkel der Medieneinheit (120) bezüglich des Gehäuses (110) in einem Bereich von etwa 0 Grad bis etwa 45 Grad einschränkt.

6. Unterhaltungssystem nach Anspruch 1, wobei die Medieneinheit (120) verschwenkbar mit dem Gehäuse (110) über einer Gelenkanordnung verbunden ist, und wobei die Gelenkanordnung einen ersten Gelenkbereich (180) aufweist, der auf einer Seite der Medieneinheit (120) liegt, wobei der erste Gelenkbereich (180) eine Platte (181) aufweist, durch welche eine Fixiervorrichtung in eine Ausnehmung (183), welche in dem Gehäuse (110) gebildet ist, geführt ist.

7. Unterhaltungssystem nach Anspruch 6, wobei die Gelenkanordnung weiterhin einen zweiten Gelenkbereich (184) aufweist, der auf einer Seite der Medieneinheit (120) gegenüber liegend der Seite der Medieneinheit (120), auf der der erste Gelenkbereich (180) gebildet ist, und wobei der zweite Gelenkbereich (184) eingerichtet ist, in eine Ausnehmung (185), welche in dem Gehäuse (110) gebildet ist, zu passen.

8. Unterhaltungssystem nach Anspruch 7, wobei die Medieneinheit (120) auf einen Winkel von etwa 135 Grad bezüglich des Gehäuses (110) verschwenkbar ist.

## Revendications

1. Système de divertissement pour un siège d'un véhicule comprenant :
un logement (110) conçu pour être monté à l'intérieur d'un siège d'un véhicule ; et
une unité multimédia (120) logée à l'intérieur du logement (110) et reliée de manière pivotante au logement (110),
**caractérisé en ce que**
le logement (110) inclut une rainure courbée (191) formée à l'intérieur d'une paroi latérale du logement (110) conçue pour mettre en prise une patte latéralement mobile (190) située sur un côté arrière de l'unité multimédia (120), et dans lequel la patte (190) peut être soit étendue pour mettre en prise la rainure (191) soit rétractée de sorte que la patte (190) n'est pas en prise avec la rainure (191) en faisant coulisser une poignée (192) attachée à la patte (190) dans des sens latéraux opposés et dans lequel la rainure courbée (191) suit la rotation de l'unité multimédia (120) par rapport au logement (110), et un élément souple (162) disposé sur une paroi latérale du logement (110) pour mettre en prise une partie de l'unité multimédia (120) pour encliqueter l'unité multimédia (120) en place à l'intérieur du logement (110), dans lequel la partie de l'unité multimédia (120) mettant en prise l'élément souple (162) inclut une patte (163), et dans lequel l'élément souple (162) fléchit en s'écartant d'un centre du logement (110) par pression provenant de la patte (163) quand l'unité multimédia (120) est pivotée vers le logement (110) et une fois que la patte (163) passe l'élément souple (162), l'élément souple (162) fléchit vers le centre du logement (110).

2. Système de divertissement selon la revendication 1, comprenant en outre :
un élément souple (172) disposé dans une face du logement (110) pour fournir une force élastique sur l'unité multimédia (120) dans un sens s'écartant du logement (110).

3. Système de divertissement selon la revendication 1, dans lequel le logement (110) est monté dans un appui-tête du siège du véhicule.

4. Système de divertissement selon la revendication 1, dans lequel l'unité multimédia (120) inclut au moins l'un d'un lecteur de DVD, d'un lecteur MPEG ou d'un lecteur de jeu vidéo.

5. Système de divertissement selon la revendication 1, dans lequel la mise en prise de la patte mobile (190) avec la rainure (191) limite l'angle de rotation de l'unité multimédia (120) par rapport au logement (110) dans une plage d'environ 0 degré à environ 45 degrés.

6. Système de divertissement selon la revendication 1, dans lequel l'unité multimédia (120) est reliée de manière pivotante au logement (110) par l'intermédiaire d'un ensemble d'articulation et l'ensemble d'articulation inclut une première partie d'articulation (180) située sur un côté de l'unité multimédia (120), la première partie d'articulation (180) incluant une plaque (181) à travers laquelle un dispositif de fixation est entraîné dans une partie en retrait (183) formée dans le logement (110).

7. Système de divertissement selon la revendication 6, dans lequel l'ensemble d'articulation inclut en outre une seconde partie d'articulation (184) formée sur un côté de l'unité multimédia (120) opposé au côté de l'unité multimédia (120) sur lequel la première partie d'articulation (180) est formée, et la seconde partie d'articulation (184) étant conçue pour s'ajuster dans une partie en retrait (185) formée dans le logement (110).

8. Système de divertissement selon la revendication 7, dans lequel l'unité multimédia (120) peut être pivotée à un angle d'environ 135 degrés par rapport au logement (110).
